# EUROPEAN PATENT SPECIFICATION

(11) **EP 3 518 250 B1**
(45) Date of publication and mention of the grant of the patent: **19.07.2023**
(21) Application number: 18153880.2
(22) Date of filing: 29.01.2018
(51) Int. Cl.: G21C 3/07

(54) **A STRUCTURAL COMPONENT FOR A NUCLEAR REACTOR, AND A FUEL ASSEMBLY**
STRUKTURKOMPONENTE FÜR EIN KERNREAKTOR UND BRENNELEMENTBÜNDEL
COMPOSANT STRUCTURAL POUR RÉACTEUR NUCLÉAIRE ET ENSEMBLE DE COMBUSTIBLE

(43) Date of publication of application: 31.07.2019
(73) Proprietor: Westinghouse Electric Sweden AB, 721 63 Västerås (SE)
(72) Inventor: MIDDLEBURGH, Simon, 722 33 Västerås (SE)
(74) Representative: Bjerkén Hynell KB

(56) References cited:
- WO-A1-2005/038061
- US-A1- 2016 326 616
- US-A1- 2018 025 794
- Li Nan: "Title: Additive Manufacturing of Hierarchical Multi-Phase High-Entropy Alloys for Nuclear Component Author(s)", Los Alamos National Laboratory report, 10 October 2017 (2017-10-10), XP055488553, Retrieved from the Internet: URL:http://permalink.lanl.gov/object/tr?wh at=info:lanl-repo/lareport/LA-UR-17-29212 [retrieved on 2018-06-27]
- Anonymous: "High entropy alloys - Wikipedia", , 27 March 2017 (2017-03-27), XP055488551, Retrieved from the Internet: URL:https://en.wikipedia.org/w/index.php?t itle=High_entropy_alloys&oldid=772435062 [retrieved on 2018-06-27]
- O.N. Senkov ET AL: "Accelerated exploration of multi-principal element alloys for structural applications", CALPHAD. COMPUTER COUPLING OF PHASE DIAGRAMS AND THERMOCHEMISTRY, vol. 50, 1 September 2015 (2015-09-01), pages 32-48, XP055488546, US ISSN: 0364-5916, DOI: 10.1016/j.calphad.2015.04.009
- SUN ZHIHONG ET AL: "Expanding the biotechnology potential of lactobacilli through comparative genomics of 213 strains and associated genera", NATURE COMMUNICATIONS, NATURE PUBLISHING GROUP, UK, vol. 6, 29 September 2015 (2015-09-29), XP002769022, ISSN: 2041-1723, DOI: 10.1038/NCOMMS9322
- O.N. Senkov ET AL: "Accelerated exploration of multi-principal element alloys with solid solution phases", Nature Communications, vol. 6, no. 1, 5 March 2015 (2015-03-05), XP055488540, DOI: 10.1038/ncomms7529
- Shaoqing Wang: "Atomic Structure Modeling of Multi-Principal-Element Alloys by the Principle of Maximum Entropy", ENTROPY, vol. 15, no. 12, 1 December 2013 (2013-12-01), pages 5536-5548, XP055488550, CH ISSN: 1099-4300, DOI: 10.3390/e15125536

## Description

### TECHNICAL FIELD OF THE INVENTION

The present invention refers generally to structural components for the core of nuclear fission reactors, for instance water cooled reactors, including light water reactors such as Boiling Water reactors, BWR, and Pressurized Water reactors, PWR. The structural component is also suitable for use in the next generation reactors, both fast reactors, such as lead-fast reactors, and thermal reactors.

Specifically, the present invention refers to a structural component configured to be used in the core of a nuclear fission reactor according to the preamble of claim 1.

The present invention also refers to a fuel assembly for a nuclear fission reactor, comprising a structural component.

### BACKGROUND AND PRIOR ART

EP 40901 discloses an austenitic alloy for use in a fuel cladding or possibly in a fuel duct. The austenitic alloy comprises three main elements each with a concentration of 1-50%.

WO 2005/038061 discloses an alloy suitable as coating material for a machinery member in a corrosive environment. The alloy is a Ni-Cr-Mo-V-C-based alloy.

US 4,144,059 refers generally to long range ordered alloys of the transition metals V, Ni, Co and Fe. It is mentioned that the V-Fe-Co-Ni alloy is particular useful in components such as nuclear reactor fuel cladding.

US 3,677,723 discloses a composite material for cladding nuclear fuel elements comprising a vanadium base alloy material. The alloy comprises V, Ti, Nb(Colombium), Zr, Cr, Mo, Ta, W, Al, Ni, Be, Si, Fe, Yt.

US 2018/025794 discloses a method for coating the substrate of a component for use in a water cooled nuclear reactor to provide a barrier against corrosion. The method includes providing a zirconium alloy substrate; and coating the substrate with particles selected from the group consisting of metal oxides, metal nitrides, FeCrAl, FeCrAlY, and high entropy alloys.

US 2016/0326616 discloses an entropy-controlled solid solution matrix BCC alloy having strong resistance to high-temperature neutron radiation damage. The entropy-controlled solid solution matrix BCC alloy includes three or more multicomponent main elements selected from the element group consisting of Zr, Al, Nb, Mo, Cr, V, and Ti selected based on a neutron absorption cross-sectional area and a mixing enthalpy. Each of the elements is included in an amount of 5 to 35 at %, and the entropy-controlled solid solution matrix BCC alloy is a BCC-structure solid solution matrix alloy in a medium-entropy to high-entropy state.

### SUMMARY OF THE INVENTION

The object of the present invention is to provide an improved structural component configured for being used in the core of nuclear fission reactors. In particular, it is aimed at a structural component that is improved with respect to hardness, ductility, creep, oxidation and hydrogen absorption.

This object is achieved by the structural component initially defined, which is characterized in that the concentration of each of the principal elements in the metallic alloy is at most 50 molar-% and at least 10 molar-%, and that the metallic alloy consists of one of Zr₂TiNbV, ZrTiNbVMo, ZrCrNbMo, MoNbTiZr and NbTaVZr.

Such metallic alloys are frequently called high entropy alloys, HEAs. In contrast to steel, Ni-alloys, and zirconium-based alloys, such a metallic alloy has no overall dominant element, i.e. no element with a concentration of more than 50 molar-% of the alloy. Each of the principal elements may thus have a concentration in the metallic alloy of at least 10 molar-% and at most 50 molar-%.

The metallic alloys are generally hard, ductile, and as a result of their structure have a high resiliency to creep, oxidation and hydrogen absorption effects. The metallic alloys are highly tailorable to permit achievement of specific stiffness, density and other properties.

According to an embodiment of the invention, the concentration of each of the principal elements in the metallic alloy is at most 50 molar-% and at least 15 molar-%.

According to an embodiment of the invention, the concentration of each of the principal elements in the metallic alloy is at most 50 molar-% and at least 18 molar-%.

According to an embodiment of the invention, the metallic alloy has a homogenous microstructure.

According to the invention, the metallic alloy consists of one of Zr₂TiNbV, ZrTiNbVMo, ZrCrNbMo, MoNbTiZr and NbTaVZr.

These metallic alloys all have the advantageous properties mentioned above, and thus are suitable in various nuclear reactor core components. For instance metallic alloys, containing or being based on Zr, Ti, and V, are expected to have extremely advantageous properties whilst maintaining a relatively low neutron cross-section, making them suitable for nuclear reactor applications.

According to an embodiment of the invention, the possible residual elements comprise at least one of the elements C, O, N and Si. The residual elements may form alloying elements further improving the properties of the metallic alloy, for instance changing the mechanical properties, contributing to precipitation hardening etc.

According to an embodiment of the invention, the possible residual elements together have a total concentration which is at most 1 molar-% of the metallic alloy.

According to an embodiment of the invention, the metallic alloy has a body centered cubic structure.

According to an embodiment of the invention, the structural component is a cladding tube for a fuel rod of a fuel assembly.

According to an embodiment of the invention, the cladding tube is made of the metallic alloy.

According to an embodiment of the invention, a part of the cladding tube is made of the metallic alloy. For instance, the cladding tube may comprise a surface layer of the metallic alloy. The surface layer may be an outer and/or inner surface layer.

According to the invention, the metallic alloy consists of one of Zr₂TiNbV, ZrTiNbVMo, ZrCrNbMo, MoNbTiZr and NbTaVZr. These metallic alloys are suitable for forming a cladding tube or a surface layer or coating of a cladding tube.

According to an embodiment of the invention, the structural component is a spacer for retaining fuel rods in a bundle of fuel rods in a fuel assembly.

According to an embodiment of the invention, the spacer is made of the metallic alloy.

According to an embodiment of the invention, a part of the spacer is made of the metallic alloy. For instance, the part of the spacer may comprise a surface layer of the metallic alloy, and/or one or more spring members of the metallic alloy.

The object of the invention is also achieved by the fuel assembly initially defined, which comprises a structural component as defined above or a plurality of structural components as defined above, in particular structural components in the form of cladding tubes and/or spacers as defined above.

### BRIEF DESCRIPTION OF THE DRAWINGS

The invention is now to be explained more closely through a description of various embodiments and with reference to the drawings attached hereto.
- Fig 1: discloses schematically a longitudinal sectional view of a fuel assembly for a nuclear reactor according to the invention.
- Fig 2: discloses schematically a longitudinal sectional view of a fuel rod of the fuel assembly in Fig 1.
- Fig 3: discloses schematically a sectional view of a section of a structural component of a cladding tube according to a first embodiment of the invention.
- Fig 4: discloses schematically a sectional view of a section of a structural component of a cladding tube according to a second embodiment of the invention.
- Fig 5: discloses schematically a sectional view of a section of a structural component of a spacer according to a third embodiment.
- Fig 6: discloses schematically a sectional view of a section of a structural component of a spacer according to a fourth embodiment.

### DETAILED DESCRIPTION OF VARIOUS EMBODIMENTS

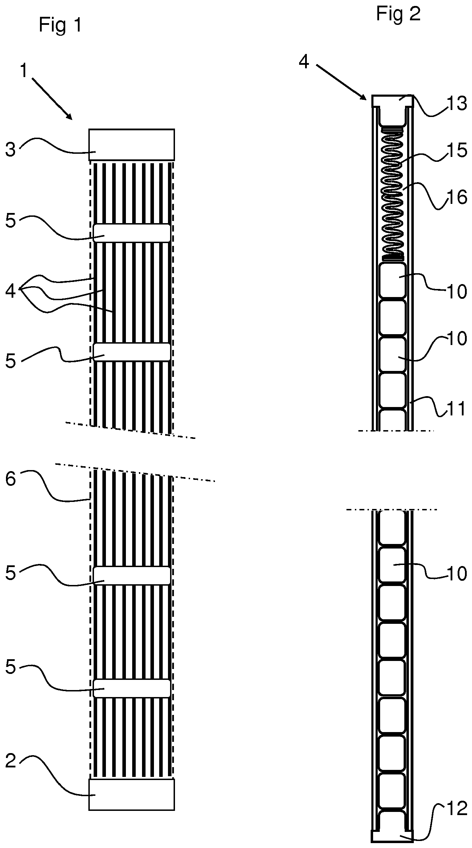

Fig. 1 discloses a fuel assembly 1 configured for being inserted into and used in the core of a nuclear fission reactor, in particular in a Light Water Reactor, LWR, such as a Boiling Water Reactor, BWR, or a Pressurized Water reactor, PWR. The fuel assembly 1 may also be suitable for use in the core of the next generation reactors, including fast reactors, such as lead-fast reactors, and thermal reactors.

The fuel assembly 1 comprises a bottom member 2, a top member 3 and a plurality of elongated fuel rods 4 extending between the bottom member 2 and the top member 3. The fuel rods 4 are maintained in their positions in the fuel assembly 1 by means of a plurality of spacers 5.

Furthermore, the fuel assembly 1 may, for instance when to be used in a BWR, comprise a flow channel or fuel box 5 indicated by dashed lines 6 and surrounding the fuel rods 4.

Fig 2 discloses one of the fuel rods 4 of the fuel assembly 1 of Fig 1. Each of the fuel rod 4 may comprise a nuclear fuel, for instance in the form of a plurality of sintered nuclear fuel pellets 10, and a cladding tube 11 enclosing the nuclear fuel, in this case the nuclear fuel pellets 10. The fuel rod 4 comprises a bottom plug 12 sealing a lower end of the cladding tube 11, and a top plug 13 sealing an upper end of the cladding tube 11. The nuclear fuel pellets 10 are arranged in a pile in an inner space 14 of the cladding tube 11. The cladding tube 11 encloses the fuel pellets 10 and a gas in the inner space 14.

A spring member 15 is arranged in an upper plenum 16 of the inner space 14 between the pile of nuclear fuel pellets 10 and the top plug 13. The spring member 15 presses the pile of nuclear fuel pellets 10 against the bottom plug 12.

Each of the spacers 5 as well as each of the cladding tubes 11 constitutes a structural component of the fuel assembly 1 to be inserted into the core of the nuclear fission reactor.

Each of the structural components, i.e. the spacers 5 and/or the cladding tubes 11, may comprise at least a part 17 of a metallic alloy that is a multi-principal-element alloy.

The multi-principal-element consists of at least four principal elements and of possible residual elements. The concentration of each of the principal elements in the metallic alloy is at most 50 molar-% and at least 10 molar-%.

More specifically, the concentration of each of the principal elements in the metallic alloy may be at most 50 molar-% and at least 15 molar-%, or at most 50 molar-% and at least 18 molar-%.

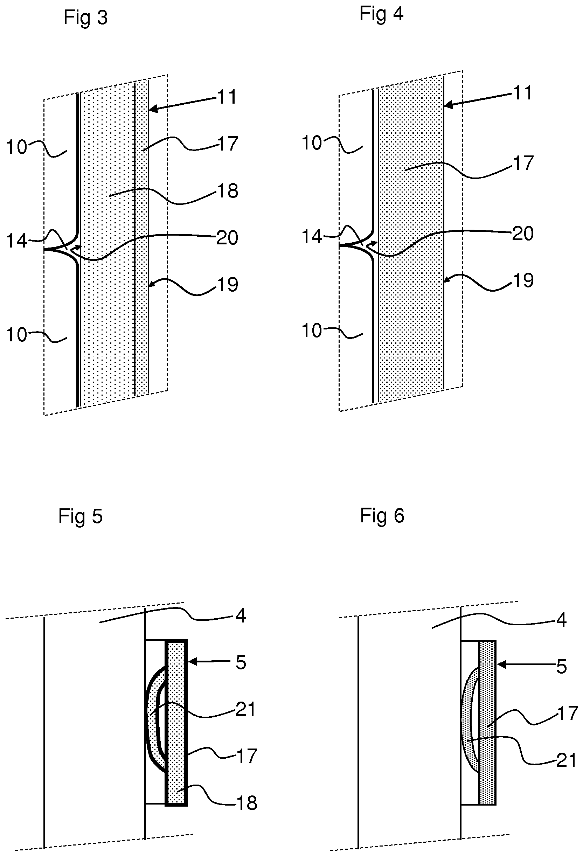

Fig 3 discloses a first embodiment, according to which the part 17 of the metallic alloy forms a surface coating of the cladding tube 11. The surface coating may be an outer surface coating as shown in Fig 3, and/or an inner surface coating of the cladding tube 11.

The outer surface coating may form the outer surface 19 of the cladding tube 11 and the fuel rod 4. The inner surface coating may form the inner surface 20 of the cladding tube 11, which is turned towards the inner space 14.

The part 17 is applied to base part 18 of the cladding tube 11. The base part 18 may be made of any suitable cladding material, for instance a zirconium-based alloy.

Fig 4 discloses a second embodiment, according to which the part 17 of the metallic alloy forms the cladding tube 11, i.e. the cladding tube 11 is made of, or consists of, the metallic alloy. Thus, the metallic alloy may form the outer surface 19 and the inner surface 20 of the cladding tube 11.

Fig 5 discloses a third embodiment, according to which the part 17 of the metallic alloy forms a surface coating of the spacer 5. The surface coating may be an outer surface coating of the spacer 5 and form an outer surface of the whole spacer 5 as is indicated in Fig 5. The part 17 is applied to base part 18 of the spacer 5. The base part 18 may be made of any suitable cladding material, for instance a nickel-chromium-based alloy, such as Inconel, or a zirconium-based alloy.

The spacer 5 may comprise spring members 21 abutting the fuel rods 4. The spring members 21 of the spacer of the third embodiment may be made of the metallic alloy, or the metallic alloy may form a surface coating of the spring member 21 as disclosed in Fig 5.

Fig 6 discloses a fourth embodiment, according to which the part 17 of the metallic alloy forms the spacer 5, i.e. the spacer 5 is made of, or consists of, the metallic alloy.

The spacer 5 of the fourth embodiment may also comprise spring members 21 abutting the fuel rods 4 and being made of the metallic alloy.

In the embodiments disclosed, the metallic alloy, which has no overall dominant element, is frequently called a high entropy alloy, HEA. The metallic alloy may have a homogenous microstructure. The metallic alloy may have a body centered cubic, BCC, structure.

The at least four principal elements of the metallic alloy are chosen from the group consisting of Zr, Ti Nb, V, Mo Ta, and Cr. Preferably, the metallic alloy may consist of four or five principal elements chosen from this group.

In particular, the metallic alloy may consist of one of the following: Zr₂TiNbV, ZrTiNbVMo, ZrCrNbMo, MoNbTiZr, and NbTaVZr.

The possible residual elements that may be comprised by the metallic alloy comprise at least one of the elements C, O, N and Si. These elements may form alloying elements, which may improve the properties of the metallic alloy further. Preferably, the total concentration of the possible residual elements may be at most 1 molar-% of the metallic alloy.

According to the first and second embodiments, the principal elements of the metallic alloy may be chosen from the group consisting of Zr, Ti, Nb, V, Mo and Ta, which are all suitable for being contained in metallic alloys for cladding tubes. In particular, a first one of the principal elements may be Zr, and a second one of the principal elements may be Nb.

More specifically, the metallic alloy may preferably consist of one of Zr₂TiNbV, ZrTiNbVMo, ZrCrNbMo, MoNbTiZr and NbTaVZr. These metallic alloys are advantageous for cladding tubes, for instance with regard to a relatively low neutron cross-section.

According to the third and fourth embodiments, a principal element of the metallic alloy may be Cr. These metallic alloys are advantageous for spacers. They may form the space, a surface layer of the spacer or a spring member of the spacer.

It should be noted that these two metallic alloys also may form a surface layer or coating of a cladding tube 11, such as the part 17 of the first embodiment.

The present invention is not limited to the embodiments disclosed but may be varied and modified within the scope of the following claims.

## Claims

1. A structural component (5, 11) configured to be used in the core of a nuclear fission reactor, comprising at least a part (17) of a metallic alloy, wherein the metallic alloy is a multi-principal-element alloy, which consists of at least four principal elements and of possible residual elements, **characterized in that** the concentration of each of the principal elements in the metallic alloy is at most 50 molar-% and at least 10 molar-%, and that the metallic alloy consists of one of Zr₂TiNbV, ZrTiNbVMo, ZrCrNbMo, MoNbTiZr and NbTaVZr.

2. The structural component (5, 11) according to claim 1, wherein the concentration of each of the principal elements in the metallic alloy is at most 50 molar-% and at least 15 molar-%.

3. The structural component (5, 11) according to claim 1, wherein the concentration of each of the principal elements in the metallic alloy is at most 50 molar-% and at least 18 molar-%.

4. The structural component (5, 11) according to any one of claims 1 to 3, wherein the metallic alloy has a homogenous microstructure.

5. The structural component (5, 11) according to any one of the preceding claims, wherein the possible residual elements comprise at least one of the elements C, O, N and Si.

6. The structural component (5, 11) according to any one of the preceding claims, wherein the possible residual elements have a total concentration which is at most 1 molar-% of the metallic alloy.

7. The structural component (5, 11) according to any one of the preceding claims, wherein the metallic alloy has a body centered cubic structure.

8. The structural component (5, 11) according to any one of the preceding claims, wherein the structural component is a cladding tube (11) for a fuel rod (4) of a fuel assembly (1).

9. The structural component (5, 11) according to claim 8, wherein the cladding tube (11) is made of the metallic alloy.

10. The structural component (5, 11) according to any one of claims 1 to 7, wherein the structural component is a spacer (5) for retaining fuel rods (4) in a bundle of fuel rods (4) in a fuel assembly (1).

11. The structural component (5, 11) according to claim 10, wherein the spacer (5) is made of the metallic alloy.

12. A fuel assembly (1) for a nuclear fission reactor, comprising a structural component (5, 11) according to any one of the preceding claims.

## Patentansprüche

1. Strukturkomponente (5, 11), die dazu ausgelegt ist, im Kern eines Kernspaltungsreaktors verwendet zu werden, umfassend mindestens ein Teil (17) aus einer Metalllegierung, wobei die Metalllegierung eine Multi-Hauptelement-Legierung ist, die aus mindestens vier Hauptelementen und aus möglichen Begleitelementen besteht, **dadurch gekennzeichnet, dass** die Konzentration jedes der Hauptelemente in der Metalllegierung höchstens 50 Mol-% und mindestens 10 Mol-% beträgt und dass die Metalllegierung aus einem von Zr₂TiNbV, ZrTiNbVMo, ZrCrNbMo, MoNbTiZr und NbTaVZr besteht.

2. Strukturkomponente (5, 11) nach Anspruch 1, wobei die Konzentration jedes der Hauptelemente in der Metalllegierung höchstens 50 Mol-% und mindestens 15 Mol-% beträgt.

3. Strukturkomponente (5, 11) nach Anspruch 1, wobei die Konzentration jedes der Hauptelemente in der Metalllegierung höchstens 50 Mol-% und mindestens 18 Mol-% beträgt.

4. Strukturkomponente (5, 11) nach einem der Ansprüche 1 bis 3, wobei die Metalllegierung eine homogene Mikrostruktur aufweist.

5. Strukturkomponente (5, 11) nach einem der vorhergehenden Ansprüche, wobei die möglichen Begleitelemente mindestens eines der Elemente C, O, N und Si umfassen.

6. Strukturkomponente (5, 11) nach einem der vorhergehenden Ansprüche, wobei die möglichen Begleitelemente eine Gesamtkonzentration aufweisen, die höchstens 1 Mol-% der Metalllegierung beträgt.

7. Strukturkomponente (5, 11) nach einem der vorhergehenden Ansprüche, wobei die Metalllegierung eine kubisch raumzentrierte Struktur aufweist.

8. Strukturkomponente (5, 11) nach einem der vorhergehenden Ansprüche, wobei die Strukturkomponente ein Hüllrohr (11) für einen Brennstab (4) eines Brennelements (1) ist.

9. Strukturkomponente (5, 11) nach Anspruch 8, wobei das Hüllrohr (11) aus der Metalllegierung hergestellt ist.

10. Strukturkomponente (5, 11) nach einem der Ansprüche 1 bis 7, wobei die Strukturkomponente ein Abstandshalter (5) zum Halten von Brennstäben (4) in einem Bündel aus Brennstäben (4) in einem Brennelement (1) ist.

11. Strukturkomponente (5, 11) nach Anspruch 10, wobei der Abstandshalter (5) aus der Metalllegierung hergestellt ist.

12. Brennelementbündel (1) für einen Kernspaltungsreaktor, umfassend eine Strukturkomponente (5, 11) nach einem der vorhergehenden Ansprüche.

## Revendications

1. Composant structurel (5, 11) configuré pour être utilisé dans le cœur d'un réacteur à fission nucléaire, comprenant au moins une partie (17) d'un alliage métallique, dans lequel l'alliage métallique est un alliage à plusieurs éléments principaux, qui est constitué d'au moins quatre éléments principaux et d'éléments résiduels éventuels, **caractérisé en ce que** la concentration de chacun des éléments principaux dans l'alliage métallique est d'au plus 50 % molaire et d'au moins 10 % molaire, et **en ce que** l'alliage métallique est constitué d'un parmi Zr₂TiNbV, ZrTiNbVMo, ZrCrNbMo, MoNbTiZr et NbTaVZr.

2. Composant structurel (5, 11) selon la revendication 1, dans lequel la concentration de chacun des éléments principaux dans l'alliage métallique est d'au plus 50 % molaire et d'au moins 15 % molaire.

3. Composant structurel (5, 11) selon la revendication 1, dans lequel la concentration de chacun des éléments principaux dans l'alliage métallique est d'au plus 50 % molaire et d'au moins 18 % molaire.

4. Composant structurel (5, 11) selon l'une quelconque des revendications 1 à 3, dans lequel l'alliage métallique présente une microstructure homogène.

5. Composant structurel (5, 11) selon l'une quelconque des revendications précédentes, dans lequel les éléments résiduels éventuels comprennent au moins un parmi C, O, N et Si.

6. Composant structurel (5, 11) selon l'une quelconque des revendications précédentes, dans lequel les éléments résiduels éventuels présentent une concentration totale qui est au plus de 1 % molaire de l'alliage métallique.

7. Composant structurel (5, 11) selon l'une quelconque des revendications précédentes, dans lequel l'alliage métallique présente une structure cubique centrée sur le corps.

8. Composant structurel (5, 11) selon l'une quelconque des revendications précédentes, dans lequel le composant de structure est un tube de gaine (11) pour une barre de combustible (4) d'un ensemble de combustible.

9. Composant structurel (5, 11) selon la revendication 8, dans lequel le tube de gaine (11) est constitué de l'alliage métallique.

10. Composant structurel (5, 11) selon l'une quelconque des revendications 1 à 7, dans lequel le composant de structure est une entretoise (5) pour retenir des barres de combustible (4) dans un faisceau de barres de combustible (4) dans un ensemble de combustible (1).

11. Composant structurel (5, 11) selon la revendication 10, dans lequel l'entretoise (5) est constituée de l'alliage métallique.

12. Ensemble de combustible (1) pour un réacteur à fission nucléaire, comprenant un composant structurel (5, 11) selon l'une quelconque des revendications précédentes.
